# EUROPEAN PATENT SPECIFICATION

(11) **EP 0 948 907 B1**
(45) Date of publication and mention of the grant of the patent: **28.11.2001**
(21) Application number: 97945880.9
(22) Date of filing: 21.11.1997
(51) Int. Cl.: A23P 1/04

(54) **PRODUCT FOR INCORPORATING DIETETIC AND ALIMENTARY INGREDIENTS INTO BEVERAGES; DIETETIC PRODUCTS AND FOOD**
DIÄT-BESTANDTEILEPRODUKT ALS ZUSATZ FÜR NAHRUNGSMITTELN, GETRÄNKE UND DIÄTETIKA
PRODUIT PERMETTANT D'INCORPORER DES INGREDIENTS DIETETIQUES ET ALIMENTAIRES DANS LES BOISSONS, LES ALIMENTS ET LES PRODUITS DIETETIQUES

(30) Priority: 22.11.1996 ES 9602470
(43) Date of publication of application: 13.10.1999
(73) Proprietor: Lipotec S.A., 08903 L'Hospitalet de Llobregat (ES)
(72) Inventor: PARENTE DUENA, Antonio, E-08960 San Just Desvern (ES); BONILLA MUNOZ, Angel, E-Sant Boi de Llobregat (ES); GARCES GARCES, Josep, E-Sant Vicens Dels Horts (ES)
(74) Representative: Davila Baz, Angel
(86) International application number: ES9700288
(87) International publication number: WO9821985

(56) References cited:
- EP-A- 0 116 311
- EP-A- 0 447 100
- WO-A-87/01587
- WO-A-89/01034
- WO-A-95/05939
- GB-A- 2 086 835
- JOURNAL OF MICROENCAPSULATION, vol. 10, num. 4, 1993, GB, páginas 413-435, XP000396663
- PATENT ABSTRACTS OF JAPAN vol. 095, no. 009, 31 Octubre 1995 & JP 07 163348 A (FUMIO YAMAUCHI), 27 Junio 1995,
- PATENT ABSTRACTS OF JAPAN vol. 009, no. 331 (C-321), 25 Diciembre 1985 & JP 60 160840 A (MIYOSHI YUSHI KK), 22 Agosto 1985,
- PATENT ABSTRACTS OF JAPAN vol. 009, no. 096 (C-278), 25 Abril 1985 & JP 59 227240 A (KEWPIE KK), 20 Diciembre 1984,
- CARBOHYDRATE POLYMERS, vol. 16, num. 4, 1991, GB, páginas 399-408, XP000218007

## Description

### Field of the Invention

This invention relates to a new product with application in the field of dietetics, nutrition, food, and drinks, which is characterised in that it is formed of millispheres which incorporate essential oils, vitamins, and compounds of interest in the drinks, dietary, food, dietary and nutrition sectors into their structure.

### State of the art

A point of growing interest in the food, nutrition, dietary and drinks industry is the use, in the formulation offood or dietary and of drink products, of substances with different nutritional properties and with the capacity to provoke physiological actions. That is to say, the use of essential oils and dietary products with different effects (for example: cholesterol reducers, relaxants, stimulants, antioxidants, vitamin supply, enzymes, etc).

However, the use of these substances dissolved in free form throughout the foodstuff or drink in question can have the consequence of the presence in the final product Of strange tastes or smells which are difficult to hide, or the substance of dietary or nutritional interest may be unstable or get degraded.

The incorporation or occlusion of these substances inside millispheres can help to solve these problems. This solution has been widely Used in the pharmaceutical and cosmetic fields, using millicapsules of amylose (WO 89/11269), millicapsules of lactic glycol (EP 0202159), microcapsules of gelatine and alginic acid (WO 87/01587), microcapsules of atelloglycanes (WO 92/02254), millicapsules of calcium alginate (EP.0391803).

### Summary of the Invention

As a result of our studies on the encapsulation of pharmaceutical products (ES-P9301637), we have surprisingly found that products of interest in the dietary, nutrition and drink sectors can be encapsulated inside certain types of millispheres of gellified hydrocolloids.

Therefore, an object of this invention consists of a product to incorporate dietary and nutritional ingredients into drinks, foodstuffs and dietary products characterised in that it is constituted of millispheres having a size between 1.5 and 3 mm, the millispheres being composed of an alginate and agar-agarmatrix incorporating, in its interior, active ingredients of interest in the field of drinks, dietics or foodstuffs.

Surprisingly, these millispheres which incorporate active ingredients of dietary and nutritional interest show high resistance which allows them to withstand the pasteurisation and sterilisation processes common in obtaining these products with application in foodstuffs, drinks and the human diet, without allowing the active ingredients encapsulated to be liberated from inside the millispheres.

### Detailed description of the invention

The present invention relates to millispheres formed from a nucleus or matrix based in a mixture of hydrocolloids accepted in the food and dietary legislation, in which the active ingredients of dietary and nutritional interest have been dispersed or dissolved.

In the system object of the present invention, the mixture of gellifiable bydrocolloids is exclusively a mixture of sodium alginate (gellification by interaction with calcium) and agar-agar (gellification by lowering the temperature), which leads to an important improvement in the stability of the systemwith respect to later manipulation employed to incorporate it into the final food or drink product..

The active ingredients of dietary and nutritional interest which can be incorporated into the new system object of this invention are selected, but not in a limiting way, from the group consisting of:
- Vegetable oils such as onagra oil, borraje oil, ricin oil, olive oil, sunflower oil,
- Animal oils such as cod-liver oil, fish oils,.EPA-18, DHA-22,
- Vegetable extracts such as ginseng, arnica, calendula,
- Enzymes and coenzymes such as ubidecarenone,
- Animal extracts Yeasts such as selenium yeast, brewers' yeast
- Vitamins are derivatives thereof such as vitamin E, vitamin E acetate, vitamin A palmitate, etc.
- Amino acids, such as cysteine,
- Proteins of animal origin such as ovoalbumin,
- Proteins of vegetable origin such as gluten,
- Hydrolysed animal or vegetable proteins such as hydrated collagen, hydrated wheat gluten,
- Natural tocopherols and their mixtures, such as Lipafra 2050,
- Stimulants such as caffeine,
- Mineral salts and oligoelements such as iron salts, zinc salts, selenium salts,

The final coloration of the millispheres of this invention can be modified by the incorporations of colouring agents authorised by the legislation in the field of food, dietetics and drinks.

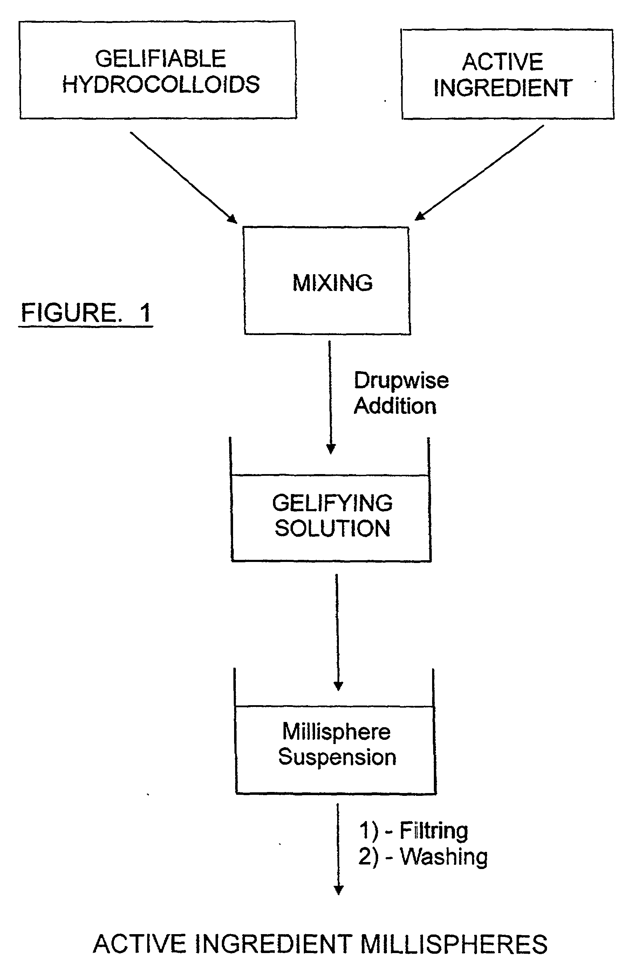

The incorporation of active ingredients of dietary or nutritional interest into the system of the this invention is carried out by emulsifying or dissolving the active ingredient in question in the solution containing the mixture of gellifiable hydrocolloids, but in no manner should these active ingredients be incorporated in liposomed form (incapsuled as liposomes). The obtention of the system of this invention is in accordance with the flow diagram represented in figure 1.

The invention will be described by the following non-limiting examples.

### Example 1

Obtaining the red millicapsules with the effect of reducing cholesterol, size 3mm

| Composition | |
|---|---|
| Cod-liver oil | 1.66% |
| Borage oil | 5.55% |
| Onagra oil | 2.77% |
| Polysorbate-20 | 0.20% |
| Agar-agar | 0.90% |
| Sodium alginate | 0.50% |
| Sodium benzoate | 0.30% |
| Red iron oxide | 0.50% |
| Glycerine | 5.00% |
| Water | up to 100.00% |

The sodium alginate and agar-agar were dissolved in water, heating the system to 95° C. With intense stirring, the mixture of cod-liver oil, borage oil, onagra oil and polysorhate-20 was added to the solution of sodium alginate and agar, adding sodium benzoate as a preservative and the colouring agent red iron oxide dispersed in glycerine.

The resulting solution was added dropwise via a 0.5 mm hole to a solution of 0.3% CaCl₂ in water. The resulting millispheres were recovered by filtration and washed with distilled water to eliminate the excess CaCl₂.

### Example 2

Obtaining the yellow millicapsules with an antioxidant effect, size 3 mm

| Composition | |
|---|---|
| Natural tocopherol (Lipafra 2050) | 6.6% |
| Selenium yeast | 3.1% |
| Ubidecarenone (conenzyme Q) | 0.3% |
| polysorbate-20 | 0.2% |
| agar-agar | 1.0% |
| sodium alginate | 0.6% |
| sodium benzoate | 0.3% |
| glycerine. | 5.0% |
| Water | up to 100% |

The sodium alginate and agar-agar were dissolved in water, heating the system to 95°C. With intense stirring, the mixture of natural tocopherol oil (Lipafra 2050), selenium yeast, ubidecarenone and polysorbate-20 were added to the solution of sodium alginate and agar, adding sodium benzoate as a preservative.

The resulting solution was added dropwise via a 0.5mm hole to a solution of 0.3% CaCl₂ in water. The resulting millispheres were recovered by filtration and washed with distilled water to eliminate the excess CaCl₂

### Example 3

### Obtaining a drink with an atioxidant effect

| Composition | |
|---|---|
| A- Kappa type Carragenine ADG39 | 0.040% |
| A- Garrofin gum | 0.060% |
| A- LM-35 type Pectin amide | 0.092% |
| (Hercules type 104 AS) | |
| A- Potassium chloride | 0.080% |
| A- Sodium bicarbonate | 0.020% |
| A- Sodium hexametaphosphate | 0.012% |
| A- Dextrose | 0.096% |
| Millispheres EXAMPLE 2 | 2.000% |
| Concentrated syrup containing the aromas, colouring agents and desired sweeters | 80.00% |
| Demineralised water | up to 100.00% |

In a suitable container the following method is followed;
1. The mixture of A ingredients is dispersed in demineralised water, with intensive stirring.
2. This solution is brought to the boil.
3. The solution is now cooled to 50° C, to obtain what we will know as the CARRAGENATE SOLUTION.
4. The carragenate, solution is mixed with the concentrated syrup of the drink, and the resulting solution cooled to 20°C.
5. The MILLISPHERES WITH ANTIOXIDANT EFFECT obtained in EXAMPLE 2 are added, and the preparation of the drink is now complete.

## Claims

1. A product to incorporate dietary and nutritional ingradients into drinks, foodstuffs and dietary products **characterised in that** it is constituted of millispheres having a size between 1.5 and 3 mm, the millispheres being composed of an alginate and agar-agar matrix incorporating, in its interior, active ingredients of interest in the field of drinks, dietics or foodstuffs.

2. A product according to claim 1, **characterised in that** the main active ingredients of interest in the field of drinks, dietics or foodstuffs are selected from the group consisting of
- Vegetable oils such as onagra oil, borraje oil, ricin oil, olive oil, sunflower oil, etc.
- Animal oils such as cod-liver oil, fish oils, EPA-18, DHA-22,
- Vegetable extacts such as ginseng, arnica, calendula,
- Enzymes and coenzymes such as ubidecarenone,
- Animal extracts
- Yeasts such as selenium yeast, brewers' yeast
- Vitamins are derivatives thereof such as vitamin E, vitamin E acetate, vitamin A palmitate,
- Amino acids, such as cysteine,
- Proteins of animal origin such as ovoalbumin,
- Proteins of vegetable origin such as gluten,
- Hydrolysed animal or vegetable proteins such as hydrated collagen, hydrated wheat gluten,
- Natural tocopherols and their mixtures,
- Stimulants such as caffeine,
- Mineral salts and oligoelements such as iron salts, zinc salts, selenium salts,

## Patentansprüche

1. Erzeugnis zum Einbringen diätetischer oder nahrhafter Inhaltsstoffe in Getränke, Nahrungsmittei und diätetische Erzeugnisse, **dadurch gekennzeichnet, dass** es aus 1,5 bis 3 Millimeter großen Millikügelchen aus einer Alginat- und Agar-Agar-Matrix besteht, die in ihrem Inneren für den Bereich der Getränke, Ernährung und Diät interessante aktive Inhaltsstoffe aufweisen.

2. Erzeugnis gemäß Anspruch 1, **dadurch gekennzeichnet, dass** die Wichtigsten der interessanten aktiven Inhaltsstoffe aus folgender Gruppe ausgewählt sind:
• Pflanzliche Öle wie Nachtkerzenöl, Borretschöl, Rizinusöl, Sonnenblumenöl oder dergleichen,
• Tierische Öle wie Lebertran, Fischöl, EPA-18, DHA-22,
• Pflanzenextrakte wie Ginseng, Arnika, Calendula,
• Enzyme und Coenzyme wie Ubidecarenon,
• Tierextrakte,
• Hefe wie selenhaltige Hefe, Bierhefe,
• Vitamine und deren Derivate wie Vitamin-E, Vitamin-E-acetat, Vitamin-A-palmitat,
• Aminosäuren wie Cystein,
• Proteine tierischen Ursprungs wie Ovoalbumin,
• Proteine pflanzlichen Ursprungs wie Gluten,
• Hydrolysierte tierische oder pflanzliche Proteine wie hydratisiertes Collagen, hydratisiertes Weizengluten,
• Natürliche Tocopherole und deren Mischungen,
• Anregungsmittel wie Koffein,
• Mineralsalze und Oligoelemente wie Eisensalze, Zinksalze, Selensalze.

## Revendications

1. Produit pour incorporer des ingrédients diététiques et nutritifs dans des boissons, des denrées alimentaires et des produits diététiques, **caractérisé en ce qu'**il est constitué de sphères millimétriques, ayant une taille de 1,5 à 3 mm, les sphères millimétriques étant composées d'un alginate et d'une matrice de gélose contenant, à l'intérieur, des ingrédients actifs intéressants dans le domaine des boissons, des produits diététiques ou des denrées alimentaires.

2. Produit selon la revendication 1, **caractérisé en ce que** les principaux ingrédients actifs intéressants dans le domaine des boissons, des produits diététiques ou des denrées alimentaires, sont choisis parmi :
- les huiles végétales telles que l'huile d'onagre, l'huile de bourrache, l'huile de ricin, l'huile d'olive, l'huile de tournesol,
- les huiles animales telles que l'huile de foie de morue, les huiles de poisson, l'EPA-18, la DHA-22,
- les extraits végétaux tels que de ginseng, d'arnica, de calendula,
- les enzymes et les coenzymes telles que l'ubidécarénone,
- les extraits animaux,
- les levures telles que la levure séléniée, la levure de bière,
- les vitamines et leurs dérivés tels que la vitamine E, l'acétate de vitamine E, le palmitate de vitamine A,
- les aminoacides tels que les cystéine,
- les protéines d'origine animale telles que l'ovalbumine,
- les protéines d'origine végétale telles que le gluten,
- les protéines animales ou végétales hydrolysées telles que le collagène hydraté, le gluten de blé hydraté,
- les tocophérols naturels et leurs mélanges,
- les stimulants tels que la caféine,
- les sels minéraux et les oligo-éléments tels que les sels de fer, les sels de zinc et les sels de sélénium.
